# EUROPÄISCHE PATENTSCHRIFT

(11) **EP 3 480 097 B1**
(45) Veröffentlichungstag und Bekanntmachung des Hinweises auf die Patenterteilung: **27.03.2024**
(21) Anmeldenummer: 18204616.9
(22) Anmeldetag: 06.11.2018
(51) Int. Cl.: B62L 3/02, B62K 23/06, F16B 2/02, F16M 13/02

(54) **KLEMMELEMENT ZUR BEFESTIGUNG VON BREMS- / SCHALTHEBELEINHEITEN AN FAHRRADLENKERN SOWIE BREMS- / SCHALTHEBELEINHEIT MIT EINEM DERARTIGEN KLEMMELEMENT**
CLAMPING ELEMENT FOR ATTACHING BRAKE- / SHIFT LEVER UNITS TO BICYCLE HANDLEBARS, AND BRAKE- / SHIFT LEVER UNITS WITH SUCH CLAMPING ELEMENT
ÉLÉMENT DE SERRAGE DESTINÉ À FIXER DES UNITÉS DE LEVIER DE FREIN / DE CHANGEMENT DE VITESSE AUX GUIDONS DE VÉLO AINSI QUE UNITÉS DE LEVIER DE FREIN / DE CHANGEMENT DE VITESSE AVEC UN TEL ÉLÉMENT DE SERRAGE

(30) Priorität: 07.11.2017 DE 202017005757 U
(43) Veröffentlichungstag der Anmeldung: 08.05.2019
(73) Patentinhaber: Canyon Bicycles GmbH, 56073 Koblenz (DE)
(72) Erfinder: Heyder, Daniel, 53347 Alfter (DE); Thorwart, Julius, 56077 Koblenz (DE)
(74) Vertreter: dompatent von Kreisler Selting Werner - Partnerschaft von Patent- und Rechtsanwälten mbB

(56) Entgegenhaltungen:
- EP-A2- 2 022 711
- CN-U- 204 979 000
- DE-U1-202015 005 798
- GB-A- 1 333 333
- US-A- 5 988 573
- US-A1- 2002 020 246
- US-A1- 2004 183 273
- US-A1- 2013 277 162
- US-A1- 2014 252 746
- US-A1- 2016 311 497

## Beschreibung

Die Erfindung betrifft ein Klemmelement zur Befestigung von Brems- und Schalthebeleinheiten an Fahrradlenkern wie insbesondere Rennradlenkern. Ferner betrifft die Erfindung eine derartige Brems- und Schalthebeleinheit mit einem Klemmelement zur Befestigung an Fahrradlenkern, insbesondere Rennradlenkern.

Fahrradkomponenten wie beispielsweise Bremshebel, Schalthebel und andere Komponenten werden häufig mittels Klemmelementen wie Klemmschellen an Fahrradlenkern befestigt. Insbesondere Brems- und Schalthebeleinheiten, wie sie häufig bei Rennrädern verbaut werden, bei denen der Schalthebel in den Bremshebel integriert ist, werden über schellenartige Klemmelemente an Fahrradlenkern befestigt. Zur Befestigung müssen diese in sich geschlossenen schellenartigen Klemmelemente auf das offene Lenkradende aufgesteckt und in die entsprechende Position geschoben werden, an der sie sodann klemmend am Fahrradlenker fixiert werden. Derartige schellenförmig ausgebildete in sich geschlossene Klemmelemente weisen insbesondere den Nachteil auf, dass mittels dieser beispielsweise eine Befestigung an Lenkern mit nicht rundem Querschnitt nicht möglich ist. Ferner können derartige geschlossene Klemmelemente nicht in geschlossenen Bereichen von Lenkern eingesetzt werden, da ein Aufstecken über das Lenkerende nicht möglich ist. Auch ein nachträgliches Montieren dieser Klemmelemente, wenn auf den Lenkerenden beispielsweise bereits ein Griffband oder ein Griffelement vorgesehen ist, ist nicht möglich.

Ein Klemmelement zur Befestigung von Komponenten an einem Fahrradlenker, insbesondere einem Bremshebel mit dem Merkmal des Oberbegriffs des Anspruchs 1 ist in US 2014/252746 beschrieben.

Aufgabe der Erfindung ist es, ein Klemmelement zu schaffen, das auch bei unterschiedlichen Lenkerquerschnitten oder bei geschlossenen Lenkerformen eingesetzt werden kann. Ferner ist auch Aufgabe der Erfindung, eine entsprechende Fahrradkomponente zu schaffen.

Die Lösung der Aufgabe erfolgt erfindungsgemäß durch ein Klemmelement gemäß Anspruch 1.

Das erfindungsgemäße Klemmelement weist ein erstes Klemmteil und ein zweites Klemmteil auf. Das erste Klemmteil ist derart ausgebildet, dass es mit der Fahrradkomponente insbesondere unmittelbar verbindbar ist. Die Verbindung erfolgt hierbei vorzugsweise derart, dass das erste Klemmteil ein Verbindungsteil zur Aufnahme eines Klemmmittels wie einer Schraube aufweist. Hierzu kann das Verbindungsteil ein Gewinde aufweisen, in das die Schraube eingeschraubt werden kann. Zur Verbindung mit der Komponente weist diese vorzugsweise ein Halteteil auf, das ebenfalls mit dem Klemmmittel verbunden werden kann. Ein derartiges Halteteil kann beispielsweise eine Öffnung aufweisen, durch die die Schraube ragt, sodass durch Einschrauben der Schraube in das Gewinde des Verbindungsteils ein Verbinden des ersten Klemmteils mit der Komponente und somit ein Fixieren der Komponente am Fahrradlenker möglich ist.

Das zweite Klemmteil des erfindungsgemäßen Klemmelements ist mit dem ersten Klemmteil lösbar verbunden. Aufgrund dieser lösbaren Verbindung zwischen den beiden Klemmteilen ist es möglich das erfindungsgemäße Klemmelement auch bei geschlossenen Lenkern in einem geschlossenen Bereich anzuordnen, da es nicht mehr erforderlich ist, das Klemmelement über das Ende des Lenkers auf diesen aufzuschieben. Auch ist ein Fixieren einer Komponente mit Hilfe des erfindungsgemäßen Klemmelements beispielsweise auch möglich nachdem das Lenkerende bereits mit einem Griffband oder einem anderen Griffelement versehen ist.

In montiertem Zustand bilden das erste und das zweite Klemmelement eine in sich geschlossene Öffnung aus. In montiertem Zustand ist der Lenker somit innerhalb dieser Öffnung angeordnet, beziehungsweise von den beiden Klemmteilen vollständig umgeben.

Die Verbindung der zwei Klemmteile erfolgt erfindungsgemäß über zwei Bolzen. Eines der beiden Klemmteile weist zur Verbindung mittels eines Bolzens zwei, jeweils ein Bolzenloch aufweisende Ansätze auf. Diese Ansätze umgreifen ein Endstück des anderen Klemmteils. Es erfolgt somit ein teilweises Um- beziehungsweise Übergreifen des Endstücks eines Klemmteiles durch zwei Ansätze des anderen Klemmteils. Das Endstück weist eine Öffnung auf, die in montiertem Zustand mit den Bolzenlöchern der beiden Ansätze fluchtet, sodass zur Verbindung auf einfache Weise ein Bolzen eingeführt werden kann. Hierbei kann es sich um einen Steckbolzen handeln, da aufgrund der klemmenden Fixierung und der auftretenden Kräfte eine Herausrutschen dieses Bolzens vermieden ist. Es kann sich jedoch auch um einen Schraubbolzen handeln, sodass eines der beiden Bolzenlöcher in bevorzugter Ausführungsform ein Gewinde aufweist oder der Bolzen entsprechend einer Schraube hindurch gesteckt wird und mit einer Mutter gesichert wird.

Bei einer bevorzugten Ausführungsform des erfindungsgemäßen Klemmelements ist es möglich, dass die durch die beiden Klemmteile ausgebildete Öffnung eine unrunde Innenkontur aufweist. Hierdurch ist es möglich das Klemmelement auch an Lenkern anzuordnen, die einen nicht runden Querschnitt aufweisen. Dies ist insbesondere vorteilhaft, da es hierdurch möglich ist, auch diese Bereiche eines Lenkers aerodynamisch und/oder ergonomisch auszugestalten, indem nicht nur runde Außenkonturen gewählt werden können.

Die beiden Klemmteile können in einer weiteren Ausführungsform vorzugsweise auch derart ausgebildet sein, dass sie eine runde Innenkontur aufweisen. Mit dem erfindungsgemäß zumindest aus zwei Klemmteilen bestehenden Element ist eine Montage auch in geschlossenen Bereichen des Lenkers möglich, da das erfindungsgemäße Klemmelement nicht über das Lenkerende aufgeschoben werden muss.

In einer bevorzugten Weiterbildung ist zusätzlich ein Adapterelement vorgesehen. Das Adapterelement ist in montiertem Zustand innerhalb der durch die beiden Klemmteile ausgebildeten Öffnung angeordnet. Das Adapterelement dient zur Anpassung der Außenkontur des Lenkers an die Innenkontur der durch die beiden Klemmteile ausgebildeten Öffnung. So kann beispielsweise bei Verwendung eines Klemmelements mit im montierten Zustand kreisrunder Öffnung, dieses Klemmelement auf einem Lenker mit einer nicht runden Außenkontur verwendet werden. Hierbei wird ein Adapterelement verwendet, das derart ausgeformt ist, dass die Außenkontur des Lenkers in Verbindung mit dem Adapterelement eine kreisrunde Kontur ergibt. Das Adapterelement dient somit dazu auch bei einer unrunden Außenkontur des Lenkers ein Klemmelement mit runder Innenkontur verwenden zu können. Hierdurch ist es insbesondere möglich ein und dasselbe Klemmelement für unterschiedlich ausgebildete Lenker-Außenkonturen zu verwenden, da es nur erforderlich ist, ein entsprechend ausgebildetes Adapterelement vorzusehen.

Ebenso können auch bei einem erfindungsgemäßen Klemmelement mit einer unrunden Innenkontur Adapterelemente vorgesehen sein, sodass wiederum eine Anpassung der beispielsweise runden Außenkontur des Lenkers durch das Adapterelement an die Innenkontur des Klemmelements erfolgt.

Das Adapterelement weist in bevorzugter Ausführungsform ein insbesondere steif ausgebildetes Innenteil auf. Das Innenteil des Adapterelements ist in montiertem Zustand vorzugsweise vollständig innerhalb der von den insbesondere beiden Klemmteilen ausgebildeten Öffnung angeordnet. Hierdurch können auf gute Weise Klemmkräfte von dem Klemmelement gleichmäßig auf die Außenkontur des Lenkers und das Adapterelement übertragen werden.

Desweiteren ist es bevorzugt, dass das Adapterelement zumindest ein, insbesondere zwei Außenteile aufweist, die sich an das Innenteil anschließen. Das zumindest eine Außenteil ist in montiertem Zustand außerhalb der von dem Klemmelement ausgebildeten Öffnung angeordnet. Hierdurch kann eine zusätzliche Abstützung und Kraftübertragung von dem Klemmelement auf die Außenkontur des Lenkers über das Adapterelement erfolgen. Bevorzugt ist es hierbei, dass das zumindest eine Außenteil elastisch bzw. flexibel ausgebildet ist, sodass sich das Außenteil möglichst flächig an die Außenseite des Lenkers in montiertem Zustand anlegt. Hierzu weist das zumindest eine Außenteil vorzugsweise mehrere Lamellen auf. Die Lamellen verlaufen hierbei in bevorzugter Ausführungsform nicht parallel, insbesondere senkrecht zur Verformungsrichtung des entsprechenden Außenteils.

Bei einer bevorzugten Weiterbildung der Erfindung ist das erste und/oder das zweite Klemmteil jeweils in sich spiegelsymmetrisch ausgebildet. Hierdurch ist die Montage vereinfacht, da es nicht möglich ist die entsprechenden Klemmteile falsch anzuordnen. Eine derartig spiegelsymmetrische Ausgestaltung ist selbstverständlich nur dann zweckmäßig, wenn auch der Lenker in dem Bereich, an dem das Klemmelement angeordnet werden soll, eine symmetrische Ausgestaltung aufweist. Vorzugsweise ist die Innenkontur der durch die beiden Klemmteile ausgebildeten Öffnung derart ausgebildet, dass sie der Außenkontur des Lenkers in dem entsprechenden Bereich entspricht.

Wenngleich es bevorzugt ist, dass das Klemmelement nur ein erstes und ein zweites Klemmteil aufweist, ist es selbstverständlich auch möglich, dass das Klemmelement ein drittes oder gar weitere Klemmteile aufweist. Dies weist jedoch den Nachteil auf, dass die einzelnen Klemmteile miteinander verbunden werden müssen und insbesondere in diesen Bereichen hohe Kräfte übertragen werden müssen. Insofern ist es besonders bevorzugt, dass das Klemmelement nur zwei Klemmteile aufweist.

Vorzugsweise weist das erste oder das zweite Klemmteil zwei einander gegenüberliegende Arme auf. Diese umgeben den Lenker im montierten Zustand um mindestens die Hälfte des Umfangs des Lenkers in dem Bereich, in dem das Klemmteilelement montiert werden soll. Die beiden Arme bilden somit mindestens die Hälfte der durch die beiden Klemmteile ausgebildeten Öffnung aus. Insbesondere bilden die beiden Arme zwei Drittel dieser Öffnung aus.

Besonders bevorzugt ist es, dass das erste Klemmteil zwei derartige Arme aufweist, wobei das erste Klemmteil ferner mit dem Verbindungsteil verbunden ist bzw. das Verbindungsteil aufweist. Das Verbindungsteil dient insbesondere zum Verbinden mit der Brems-/Schalthebeleinheit, insbesondere einem Gehäuse oder Halteelement der Brems-/Schalthebeleinheit. An diesem ist der Bremshebel üblicherweise schwenkbar befestigt. Ferner sind in diesem Gehäuse bei modernen Brems-/Schalthebeleinheiten neben Hydraulikleitungen oder Bowdenzügen sowie einer Schaltmechanik ggf. auch elektronische Bauteile oder dergleichen angeordnet. Dies führt insbesondere dazu, dass der Bauraum innerhalb dieses Gehäuses sehr gering ist. Ferner variiert der Bauraum bei unterschiedlichen Herstellern. Aufgrund des Vorsehens der zwei einander gegenüberliegenden Arme, die Bestandteil des ersten Klemmteils sind, kann eine Verbindung mit einem zweiten Klemmteil nach außen verlagert werden. Eine derartige zusätzliche Verbindung ist somit nicht mehr innerhalb des Gehäuses oder innerhalb der Bremseinheit erforderlich. Vielmehr kann bei einer derartigen besonders bevorzugten Ausführungsform eine Verbindung der beiden Klemmteile deutlich einfacher erfolgen. Die Verbindung der beiden Klemmteile erfolgt somit in bevorzugter Ausführungsform in montiertem Zustand außerhalb der Brems-/Schalthebeleinheit, insbesondere außerhalb des Gehäuses der Brems-/Schalthebeleinheit.

Die Verbindung der insbesondre zwei Klemmteile kann in bevorzugter Ausführungsform über Bolzen, d.h. vorzugsweise über zwei Bolzen erfolgen. Hierbei ist es bevorzugt, dass eines der beiden Klemmteile zur Verbindung mittels eines Bolzens zwei, jeweils ein Bolzenloch aufweisende Ansätze aufweist. Diese Ansätze umgreifen in bevorzugter Weiterbildung ein Endstück des anderen Klemmteils. Es erfolgt somit ein teilweises Um- beziehungsweise Übergreifen des Endstücks eines Klemmteiles durch zwei Ansätze des anderen Klemmteils. Das Endstück weist eine Öffnung auf, die in montiertem Zustand mit den Bolzenlöchern der beiden Ansätze fluchtet, sodass zur Verbindung auf einfache Weise ein Bolzen eingeführt werden kann. Hierbei kann es sich um einen Steckbolzen handeln, da aufgrund der klemmenden Fixierung und der auftretenden Kräfte eine Herausrutschen dieses Bolzens vermieden ist. Es kann sich jedoch auch um einen Schraubbolzen handeln, sodass eines der beiden Bolzenlöcher in bevorzugter Ausführungsform ein Gewinde aufweist oder der Bolzen entsprechend einer Schraube hindurch gesteckt wird und mit einer Mutter gesichert wird.

In besonders bevorzugter Ausführungsform sind beide Klemmteile aus hochfestem Material hergestellt. Das Material weist vorzugsweise eine Streckgrenze R_{p 0,2} >1000 N/mm², insbesondere R_{p 0,2} >1100 N/mm² auf. Die Zugfestigkeit des verwendeten hochfesten Materials beträgt vorzugsweise Rₘ>1200 N/mm², insbesondere Rₘ >1400N/mm².

Desweiteren ist es bevorzugt die beiden Klemmteile des erfindungsgemäßen Klemmelements durch Lasersintern, Drahterodieren oder CNC-Fräsen herzustellen. Besonders bevorzugt ist die Herstellung durch MIM-Prozesse (Metal Injection Molding).

Desweiteren betrifft die Erfindung eine Fahrradkomponente zur Befestigung an einem Fahrradlenkers mit einem Klemmelement wie vorstehend beschrieben.

Erfindungsgemäß handelt es sich bei der Fahrradkomponente um eine Brems-/Schalthebeleinheit. Diese weist ein Gehäuse zur Aufnahme einer Hebelmechanik sowie zur drehbaren und/oder schwenkbaren Befestigung eines Bremshebels, sowie eines Schalthebels auf. Das Gehäuse ist ferner mit einem Halteteil verbunden, das vorzugsweise innerhalb des Gehäuses angeordnet ist. Das Halteteil dient zur Aufnahme eines Klemmmittels wie einer Schraube. Das Klemmmittel wird zur Fixierung der Fahrradkomponente an dem Lenker mit dem Verbindungsteil des ersten Klemmteils des Klemmelements verbunden.

Nachfolgend wird die Erfindung anhand einer bevorzugten Ausführungsform unter Bezugnahme auf die anliegenden Zeichnungen näher erläutert.

Es zeigen:
- Figur 1:: eine schematische perspektivische Ansicht einer bevorzugten Ausführungsform eines Klemmelements,
- Figur 2:: eine schematische perspektivische Ansicht eines Klemmelements, das nicht Bestandteil der Erfindung ist,
- Figur 3:: eine schematische Seitenansicht eines Fahrradlenkers mit montierter Brems-/Schalthebeleinheit,
- Figur 4:: eine schematische Rückansicht der an dem Fahrradlenker montierten Brems-/Schalthebeleinheit gemäß Figur 3,
- Figur 5:: eine schematische Schnittansicht durch das montierte Klemmelement,
- Figur 6:: eine schematische Draufsicht eines Adapterelements und
- Figur 7:: eine schematische Seitenansicht des in Figur 6 dargestellten Adapterelements.

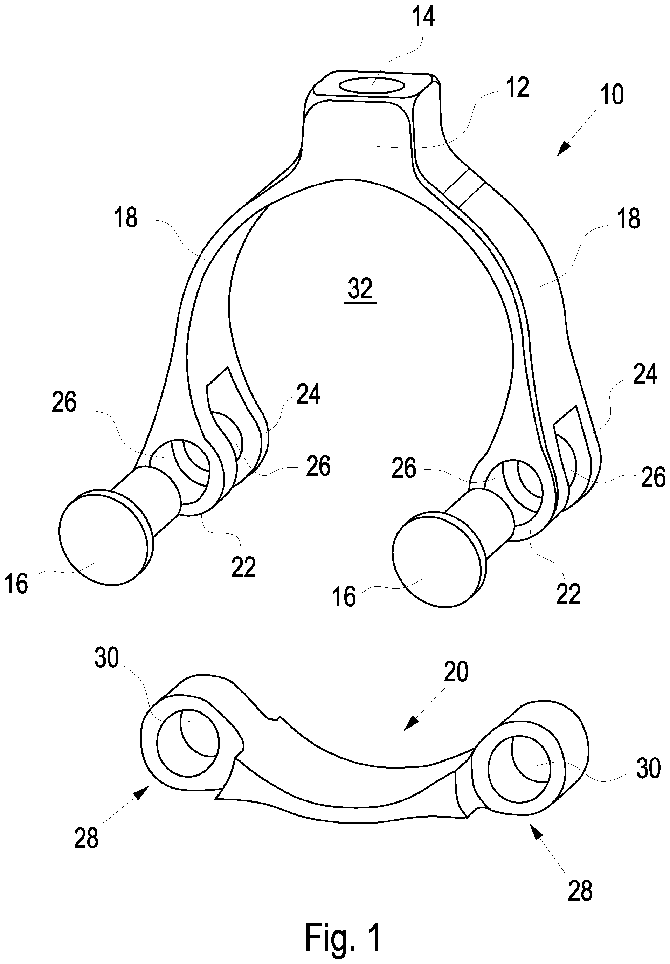

Bei der in Figur 1 dargestellten ersten bevorzugten Ausführungsform weist das Klemmelement ein erstes Klemmteil 10 sowie ein zweites Klemmteil 20 auf. Das erste Klemmteil 10 weist ein Verbindungsteil 12 auf. Das Verbindungsteil 12 weist eine mit einem Gewinde versehene Öffnung 14 auf. In die Öffnung 14 kann ein Klemmmittel wie eine Schraube eingeschraubt werden. Dieses Klemmmittel dient zur Verbindung mit einem Halteteil einer zu fixierenden Fahrradkomponente.

Zur Verbindung des ersten Klemmteils 10 mit dem zweiten Klemmteil 20 sind zwei Bolzen 16 vorgesehen. Zur Befestigung mittels Bolzen 16 weisen zwei einander gegenüberliegende Arme 18 des ersten Klemmteils 10 an ihren Enden jeweils zwei Ansätze 22, 24 auf, die einander gegenüberliegend angeordnet und vorzugsweise mit den Armen 18 einstückig ausgebildet sind. Beide Ansätze 22, 24 weisen jeweils ein Bolzenloch 26 auf, wobei die beiden Bolzenlöcher 26 jeweils zueinander koaxial sind. Das zweite Klemmteil 20 weist an den beiden Endstücken 28 jeweils eine Öffnung 30 auf. Zur Montage der beiden Klemmteile 10, 20 werden die Endstücke 28 zwischen die beiden Ansätze 22, 24 geführt, sodass die Bolzenlöcher 26 mit den Öffnungen 30 fluchten. Zur Fixierung werden sodann die beiden Bolzen 16 eingeführt.

In montiertem Zustand, d.h. wenn das erste Klemmteil 10 mittels des Bolzen 16 mit dem zweiten Klemmteil 20 verbunden ist, bilden die beiden Klemmteile 10, 20 eine Öffnung 32 aus. Diese weist in bevorzugter Ausführungsform eine nicht runde Innenkontur auf, die vorzugsweise an die Außenkontur des Bereichs des Lenkers angepasst ist, an dem die Fahrradkomponente fixiert werden soll.

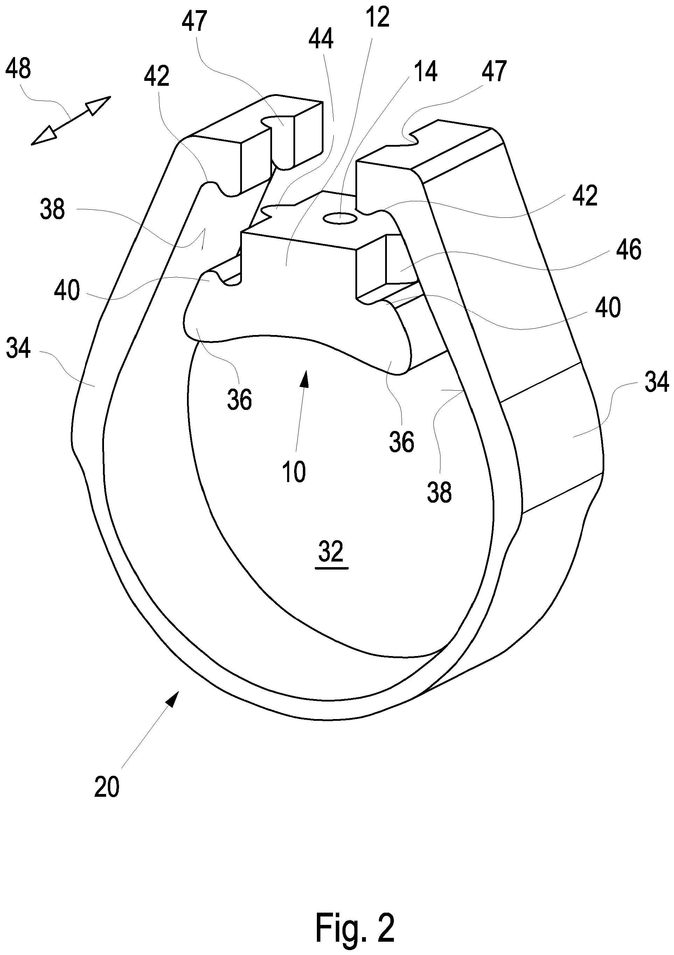

Bei dem in Figur 2 dargestellten, nicht beanspruchten Klemmelement sind ähnliche Bauteile mit denselben Bezugszeichen gekennzeichnet. So weist ein erstes Klemmteil 10 ebenfalls ein Verbindungsteil 12 auf, das eine insbesondere mit Gewinde versehene Öffnung 14 aufweist. Das zweite Klemmteil 20 weist bei dieser Ausführungsform zwei einander gegenüberliegende Arme 34 auf.

Die Verbindung der beiden Klemmteile 10, 20 erfolgt bei dieser Ausführungsform reibschlüssig. Hierzu weist das erste Klemmteil 10 zwei einander gegenüberliegende Ansätze 36 auf. Diese liegen in montiertem Zustand jeweils an ebenfalls einander gegenüberliegenden Innenseiten 38 der beiden Arme 34 des zweiten Klemmteils 20 an.

Um bei der Montage ein Auseinanderdrücken der beiden Arme 34 zu vermeiden, weisen in bevorzugter Ausführungsform die beiden Ansätze 36 zwei Fortsätze 40 auf. Die Fortsätze 40 greifen im montierten Zustand in Ausnehmungen 42, die in den oberen Endbereichen der beiden Arme 34 vorgesehen sind, ein.

Bei dem in Figur 2 dargestellten Klemmelement sind an Außenseiten des Verbindungsteils 12 zwei einander gegenüberliegende Justagenasen 46 vorgesehen, die in Justageöffnungen 47 eingreifen. Die Justageöffnungen 47 sind an den einander gegenüberliegenden Enden der beiden Arme 34 angeordnet. Durch Eingreifen der Justagenasen 46 in die Justageöffnungen 47 ist ein Verschieben der beiden Klemmteile 10, 20 in Längsrichtung 48 vermieden.

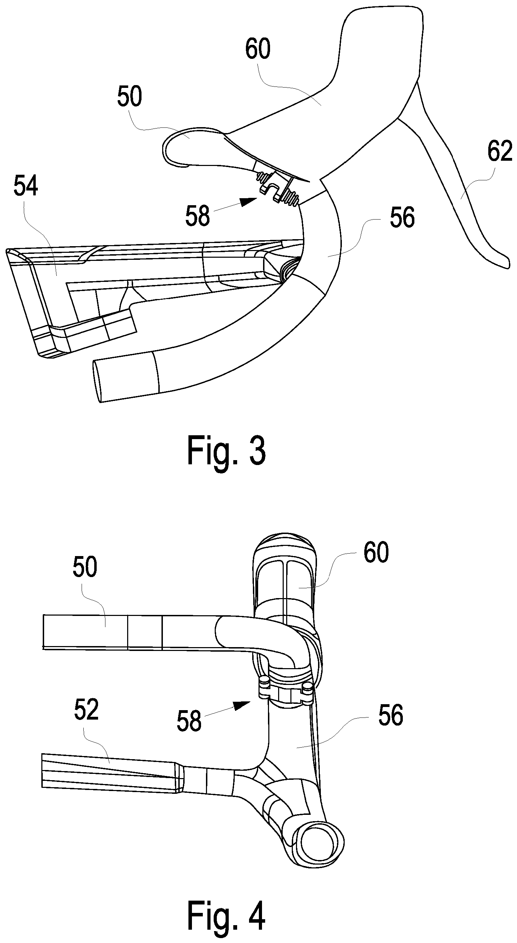

In den Figuren 3 und 4 ist eine Fahrradkomponente in Form einer Brems-/ Schalthebeleinheit in Verbindung mit dem in Figur 1 dargestellten Klemmelement in montiertem Zustand dargestellt.

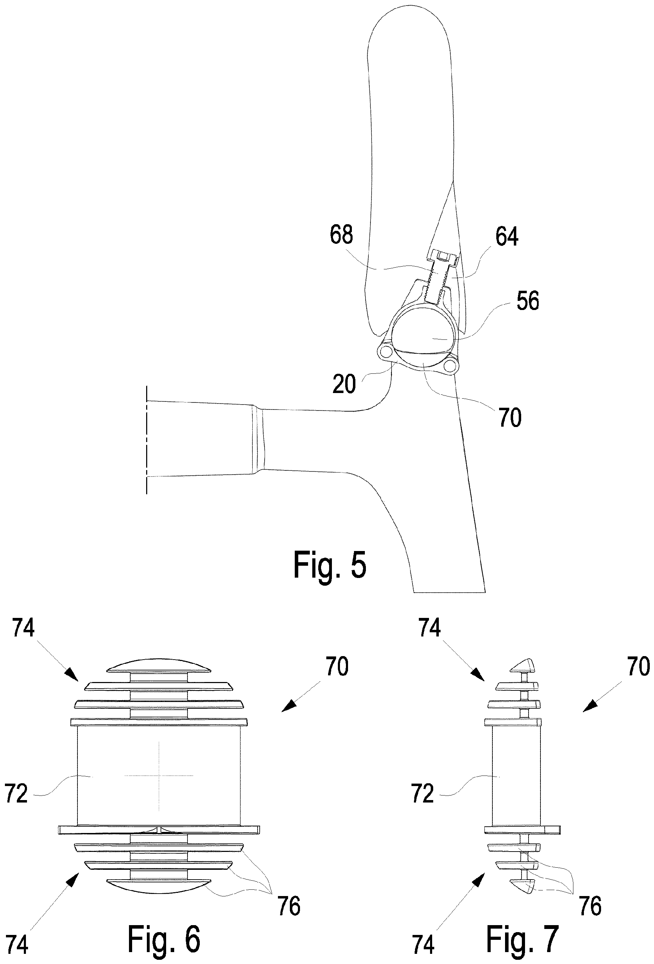

Der dargestellte Rennradlenker weist einen oberen Querträger 50, sowie einen hierzu im Wesentlichen parallelen unteren Querträger 52 auf. Der untere Querträger 52 ist mit dem Lenkervorbau 54 verbunden bzw. im dargestellten Ausführungsbeispiel einstückig ausgebildet. In einem geschlossenen Bereich 56 des Lenkers ist das erfindungsgemäße Klemmelement 58, das die beiden Klemmteile 10, 20 aufweist, angeordnet. Das Klemmelement 58 dient zum klemmenden Halten einer Brems-/ Schalthebeleinheit 60. Diese weist zumindest einen entsprechend schwenkbaren und drehbaren Hebel 62 auf, mit dem einerseits ein Bremsvorgang und andererseits ein Schaltvorgang durchgeführt werden kann. Der Hebel 62 ist an einem Gehäuse 66 schwenkbar und drehbar fixiert. In dem Gehäuse 66 ist ferner eine entsprechende Schaltmechanik angeordnet. Desweiteren ist in dem Gehäuse 66 ein beispielsweise als Steg 64 ausgebildetes Halteteil (Fig. 5) angeordnet. Dieses weist eine Öffnung bzw. Durchgangsbohrung auf, durch die eine Schraube von oben eingesteckt werden kann. Diese Schraube 68 wird sodann in die Öffnung 14 des Verbindungsteils 12 des ersten Klemmteils 10 zur Fixierung eingeschraubt.

In den Figuren 5 bis 7 ist ein Lenker dargestellt, der im Bereich in dem das Klemmelement 58 angeordnet ist eine unrunde Außenkontur (Fig. 7) aufweist. Da im dargestellten Ausführungsbeispiel ein Klemmelement verwendet wird, das im montierten Zustand eine kreisrunde Innenkontur aufweist, ist in diesem Ausführungsbeispiel gemäß einer bevorzugten Ausführungsform der Erfindung ein Adapterelement 70 (Fig. 7) angeordnet. Durch das Adapterelement 70 wird die Außenkontur des Lenkers zu einer kreisrunden Außenkontur ergänzt. Hierdurch ist es möglich, auch bei einem nicht runden Lenker 56 ein Klemmelement 58 mit runder Innenkontur zu verwenden.

In der dargestellten Ausführungsform weist das Adapterelement 70 ein Innenteil 72 und zwei sich hieran anschließende Außenteile 74 auf. Das Innenteil 72 weist eine Außenkontur auf, die teilkreisförmig ist, sodass diese der Innenkontur des Klemmelements 58 bzw. des zweiten Klemmteils 20 (Fig. 5) entspricht.

Die beiden Außenteile 74 weisen im dargestellten Ausführungsbeispiel mehrere Lamellen 76 auf, sodass eine gewisse Elastizität gegeben ist. Hierdurch können sich die Außenteile 74 an gekrümmte Bereiche des Lenkers (siehe Fig. 3) anpassen. Im dargestellten Ausführungsbereich verlaufen die Lamellen 76 senkrecht zur Verformungsrichtung, bzw. senkrecht zur Krümmung des Lenkers.

## Patentansprüche

1. Klemmelement zur Befestigung von Brems- / Schalthebeleinheiten an Fahrradlenkern, insbesondere Rennradlenkern, mit
einem ersten Klemmteil (10), das mit der Brems-/Schalthebeleinheit verbindbar ist und
einem zweiten Klemmteil (20), das mit dem ersten Klemmteil (10) lösbar verbunden ist,
wobei das erste und das zweite Klemmteil (10, 20) eine geschlossene Öffnung (32) ausbilden, in welcher der Lenker im montierten Zustand angeordnet ist und
wobei die Klemmteile (10, 20) über zwei Bolzen (16) miteinander verbunden sind
**dadurch gekennzeichnet, dass**
das erste Klemmteil (10) oder das zweite Klemmteil (20) zur Verbindung mittels der Bolzen (16) zwei jeweils ein Bolzenloch (26) aufweisende Ansätze (22, 24) aufweisen, die jeweils ein Endstück (28) des anderen Klemmteils (10, 20) umgreifen, wobei die Endstücke (28) jeweils eine Öffnung (30) aufweist, die jeweils zum Einführen eines Bolzens (16) mit den Bolzenlöchern (26) fluchtet.

2. Klemmelement nach Anspruch 1, **dadurch gekennzeichnet, dass** die Öffnung (32), in welcher der Lenker in montiertem Zustand angeordnet ist, eine unrunde Innenkontur aufweist

3. Klemmelement nach Anspruch 1 oder 2, **dadurch gekennzeichnet, dass** das erste Klemmteil (10) ein Verbindungsteil (12) zur Aufnahme eines Klemmmittels wie eine Schraube aufweist.

4. Klemmelement nach einem der Ansprüche 1 bis 3, **dadurch gekennzeichnet, dass** das erste und/oder zweite Klemmteil (10, 20) in sich spiegelsymmetrisch ausgebildet sind.

5. Klemmelement nach einem der Ansprüche 1 bis 4, **dadurch gekennzeichnet, dass** das erste oder zweite Klemmteil (10, 20) zwei einander gegenüberliegende Arme (18) aufweist, die mindestens die Hälfte, vorzugsweise zwei Drittel der Öffnung (32), in welcher der Lenker in montiertem Zustand angeordnet ist, ausbilden.

6. Klemmelement nach einem der Ansprüche 1 bis 5, **dadurch gekennzeichnet, dass** das erste und zweite Klemmteil (10, 20) aus hochfestem Material hergestellt sind.

7. Klemmelement nach einem der Ansprüche 1 bis 6, **dadurch gekennzeichnet, dass** das erste und zweite Klemmteil (10, 20) durch Lasersintern, Drahterodieren, CNC-Fräsen oder MIM-Prozesse hergestellt ist.

8. Klemmelement nach einem der Ansprüche 1 bis 7 in Verbindung mit einem Lenker, **dadurch gekennzeichnet, dass** in der von den Klemmteilen (10, 20) in montiertem Zustand ausgebildeten Öffnung (32) ein Adapterelement (70) zur Anpassung der Außenkontur des Lenkers an die Innenkontur der Öffnung (32) vorgesehen ist, wobei das Adapterelement (70) vorzugsweise derart ausgebildet ist, dass es zusammen mit dem Lenker eine kreisrunde Außenkontur ausbildet.

9. Klemmelement nach Anspruch 8 in Verbindung mit einem Lenker, **dadurch gekennzeichnet, dass** das Adapterelement (70) ein Innenteil (72) aufweist, das in montiertem Zustand vorzugsweise vollständig innerhalb der von den Klemmteilen (10, 20) ausgebildeten Öffnung (32) angeordnet ist, wobei mit dem Innenteil (72) vorzugsweise zumindest ein elastisch verformbares Außenteil (74) verbunden ist, das in montiertem Zustand außerhalb der von den Klemmteilen (10, 20) ausgebildeten Öffnung (32) angeordnet ist.

10. Klemmelement nach Anspruch 9 in Verbindung mit einem Lenker, **dadurch gekennzeichnet, dass** das zumindest eine Außenteil (74) insbesondere mehrere Lamellen (76) aufweist, die vorzugsweise senkrecht zur Verformungsrichtung in montiertem Zustand verlaufen.

11. Brems-/Schalthebeleinheit zur Befestigung an einem Fahrradlenker, wobei die Brems-/Schalthebeleinheit ein Klemmelement nach einem der Ansprüche 1 bis 10 aufweist, wobei die Brems-/Schalthebeleinheit ein Gehäuse (66) zur Aufnahme einer Hebelmechanik und zum drehbaren und/oder schwenkbaren Halten eines Brems-/ Schalthebels (62, 64) aufweist, wobei das Gehäuse (66) mit einem Halteteil zur Aufnahme eines Klemmmittels wie einer Schraube verbunden ist, das mit dem Verbindungsteil (12) des ersten Klemmteils (10) des Klemmelements zur Fixierung am Lenker verbindbar ist.

## Claims

1. Clamping element for fastening bicycle components, in particular brake/gearshift units, to bicycle handlebars, in particular racing bicycle handlebars, comprising
a first clamping part (10) adapted to be connected with the brake/gearshift unit, and
a second clamping part (20) releasably connected with the first clamping part (10),
wherein the first and the second clamping part (10, 20) form a closed opening (32) in which the handlebar is arranged in the mounted state, and
the clamping parts (10, 20) are connected with each other by two bolts (16),
**characterized in that**
the first clamping part (10) or the second clamping part (20) comprises two lugs (22, 24) each having a bolt hole (26) for the connection by bolts (16), said lugs engaging around an end part (28) of the other clamping part (10, 20), the end parts (28) each having an opening (30) which, for the insertion of a bolt (16), is in alignment with the bolt holes (26).

2. Clamping element of claim 1, **characterized in that** the opening (32) in which the handlebar is arranged in the mounted state has a non-round inner contour.

3. Clamping element of claim 1 or 2, **characterized in that** the first clamping part (10) comprises a connecting part (12) for receiving a clamping means such as a screw.

4. Clamping element of one of claims 1 to 3, **characterized in that** the first and/or second clamping part (10, 20) are configured to be mirror-symmetrical in themselves.

5. Clamping element of one of claims 1 to 4, **characterized in that** the first or second clamping part (10, 20) have two arms (18, 34) opposing each other, which form at least one half, preferably two thirds of the opening (32) in which the handlebar is arranged in the mounted state

6. Clamping element of one of claims 1 to 5, **characterized in that** the first and the second camping part (10, 20) are made of a high-strength material.

7. Clamping element of one of claims 1 to 6, **characterized in that** the first and the second clamping part (10, 20) are made by laser sintering, wire erosion, CNC milling or MIM processes.

8. Clamping element of one of claims 1 to 7, **characterized in that** an adapter element (70) is provided in the opening formed by the clamping parts (10, 20) in the mounted state, the adapter element being provided for adapting the outer contour of the handlebar to the inner contour of the opening (32), the adapter element (70) being preferably configured such that it forms a circular outer contour together with the handlebar.

9. Clamping element of claim 8 in combination with a handlebar, **characterized in that** the adapter element (70) has an inner part (72) which in the mounted state is preferably arranged completely inside the opening (32) formed by the clamping parts (10, 20), the inner part (72) being preferably connected with at least one elastically deformable outer part (74), which outer part is arranged outside the opening (32) formed by the clamping parts (10, 20), when in the mounted state.

10. Clamping element of claim 9 in combination with a handlebar, **characterized in that** the at least one outer part (74) comprises in particular a plurality of lamellae (76) which in the mounted state preferably extend perpendicularly to the direction of deformation.

11. Brake/gearshift lever unit for fastening on a bicycle handlebar, wherein the brake/gearshift lever unit comprises a clamping element of one of claims 1 to 10, the brake/gearshift lever unit comprising a housing (66) for receiving a lever mechanism and for rotatably and/or pivotably holding a brake/gearshift lever (62, 64), the housing (66) being connected with a holding part for receiving a clamping means such as a screw, which is adapted to be connected with the connecting part (12) of the first clamping part (10) of the clamping element for fixation on the handlebar.

## Revendications

1. Élément de serrage pour fixer des composants de frein/levier de changement de vitesse à des guidons de vélo, en particulier à des guidons de vélo de route, comprenant
une première pièce de serrage (10) qui peut être reliée au composant de frein/levier de changement de vitesse, et
une seconde pièce de serrage (20) qui est reliée de manière amovible à la première pièce de serrage (10),
les première et seconde pièces de serrage (10, 20) formant une ouverture fermée (32) dans laquelle le guidon est disposé à l'état monté, et
les pièces de serrage (10, 20) étant reliées entre elles par deux boulons (16),
**caractérisé en ce que**
la première pièce de serrage (10) ou la seconde pièce de serrage (20), pour la liaison au moyen des boulons (16), comprend respectivement deux appendices (22, 24) ayant chacune un trou de boulon (26), qui entourent respectivement une pièce d'extrémité (28) de l'autre pièce de serrage (10, 20), les pièces d'extrémité (28) comprenant respectivement une ouverture (30) qui est alignée avec les trous de boulon (26) pour l'introduction d'un boulon (16).

2. Élément de serrage selon la revendication 1, **caractérisé en ce que** l'ouverture (32) dans laquelle le guidon est agencé à l'état monté a un contour intérieur non rond.

3. Élément de serrage selon la revendication 1 ou 2, **caractérisé en ce que** la première pièce de serrage (10) comprend une pièce de liaison (12) pour recevoir un moyen de serrage tel qu'une vis.

4. Élément de serrage selon l'une quelconque des revendications 1 à 3, **caractérisé en ce que** la première et/ou la seconde partie de serrage (10, 20) sont réalisées en symétrie spéculaire.

5. Élément de serrage selon l'une quelconque des revendications 1 à 4, **caractérisé en ce que** la première ou la seconde pièce de serrage (10, 20) comprend deux bras (18) opposés l'un à l'autre, qui forment au moins la moitié, de préférence les deux tiers, de l'ouverture (32) dans laquelle le guidon est agencé à l'état monté.

6. Élément de serrage selon l'une quelconque des revendications 1 à 5, **caractérisé en ce que** la première et la seconde pièce de serrage (10, 20) sont fabriquées en un matériau à haute résistance.

7. Élément de serrage selon l'une quelconque des revendications 1 à 6, **caractérisé en ce que** la première et la seconde pièce de serrage (10, 20) sont fabriquées par l'intermédiaire d'un frittage laser, d'une érosion par fil, d'un fraisage CNC ou d'un processus MIM.

8. Élément de serrage selon l'une quelconque des revendications 1 à 7 en liaison avec un guidon, **caractérisé en ce qu'**un élément adaptateur (70) est prévu dans l'ouverture (32) formée par les pièces de serrage (10, 20) à l'état monté pour ajuster le contour extérieur du guidon au contour intérieur de l'ouverture (32), l'élément adaptateur (70) étant conçu de préférence de manière à former avec le guidon un contour extérieur circulaire.

9. Élément de serrage selon la revendication 8 en liaison avec un guidon, **caractérisé en ce que** l'élément adaptateur (70) comprend une partie intérieure (72) qui, à l'état monté, est agencée de préférence complètement à l'intérieur de l'ouverture (32) formée par les parties de serrage (10, 20), au moins une partie extérieure (74) déformable élastiquement étant de préférence reliée à la partie intérieure (72) qui, à l'état monté, est agencée à l'extérieur de l'ouverture (32) formée par les parties de serrage (10, 20).

10. Élément de serrage selon la revendication 9 en liaison avec un guidon, **caractérisé en ce que** ladite au moins une partie extérieure (74) comprend en particulier plusieurs lamelles (76) qui s'étendent de préférence perpendiculairement à la direction de déformation à l'état monté.

11. Composant de frein/levier de changement de vitesse pour une fixation à un guidon de vélo, les composants de frein/levier de changement de vitesse comprenant un élément de serrage selon l'une quelconque des revendications 1 à 10, le composant de frein/levier de changement de vitesse comprenant un boîtier (66) pour recevoir un mécanisme de levier et pour maintenir de manière rotative et/ou pivotante un levier de frein/changement de vitesse (62, 64), le boîtier (66) étant relié à une pièce de retenue pour recevoir un moyen de serrage, tel qu'une vis, qui peut être relié à la pièce de liaison (12) de la première pièce de serrage (10) de l'élément de serrage pour une fixation sur le guidon.
